Europäisches Patentamt

European Patent Office

Office européen des brevets

(11) Publication number: **0 190 345 B1**

# EUROPEAN PATENT SPECIFICATION
## published in accordance with Art. 158(3) EPC

(45) Date of publication of patent specification: **20.02.91**

(51) Int. Cl.⁵: **G08B 23/00, G01C 21/00, G06F 15/48, G06F 15/50**

(21) Application number: **85904698.9**

(22) Date of filing: **10.07.85**

(86) International application number:
**PCT/US85/01315**

(87) International publication number:
**WO 86/01022 (13.02.86 86/04)**

(54) **GROUND PROXIMITY WARNING SYSTEM FOR USE WITH AIRCRAFT HAVING DEGRADED PERFORMANCE.**

(30) Priority: **18.07.84 US 632131**

(43) Date of publication of application:
**13.08.86 Bulletin 86/33**

(45) Publication of the grant of the patent:
**20.02.91 Bulletin 91/08**

(84) Designated Contracting States:
**BE CH DE FR GB LI NL SE**

(56) References cited:
| | |
|---|---|
| FR-A- 2 537 718 | US-A- 3 586 268 |
| US-A- 3 715 718 | US-A- 3 890 614 |
| US-A- 3 936 797 | US-A- 3 946 358 |
| US-A- 3 947 809 | US-A- 3 947 810 |
| US-A- 4 016 565 | US-A- 4 093 158 |
| US-A- 4 330 827 | US-A- 4 431 994 |

(73) Proprietor: **SUNDSTRAND DATA CONTROL, INC.**
**Overlake Industrial Park**
**Seattle, WA 98052(US)**

(72) Inventor: **BATEMAN, Charles, D.**
**16803 N.E. 16th Place**
**Bellevue, WA 98008(US)**
Inventor: **GLOVER, J.H.**
**325 - 5th Avenue South Apartment 203**
**Kirkland, WA 98033(US)**
Inventor: **MULLER, Hans, R.**
**10567 - 158th Avenue, N.E.**
**Redmond, WA 98052(US)**

(74) Representative: **SERJEANTS**
**25, The Crescent King Street**
**Leicester, LE1 6RX(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Technical Field

This invention relates to the field of aircraft ground proximity warning systems and, in particular, to systems that provide enhanced warnings in the event of degraded aircraft performance near the ground.

Background of the Invention

Ground proximity warning systems that provide warnings of potential impact with the ground under controlled flight conditions have been developed over the past fifteen years. Examples of such systems are disclosed in U.S. patents 3,946,358; 3,947,810; 4,060,793; 4,319,218 and 4,433,323. One of the objects of the ground proximity warning systems illustrated in the above patents is to utilize sensors that are normally present in commercial aircraft, such as the radio altimeter, barometric altimeter and glide slope receiver to provide the aircrew with timely warnings of an impending but inadvertent contact with the ground. These systems have generally proved to be highly effective in preventing controlled flight into terrain type accidents.

However, there are flight situations where the performance of the aircraft itself becomes degraded and in certain of these situations existing ground proximity warning systems may not provide as timely a warning as might be desired. Reasons for degraded aircraft performance are many and varied and as such include: wind shear, etc., improper configuration including gear down, partial spoilers, flaps, etc., degraded lift from rain, ice, excess weight, improper flap settings, etc., insufficient engine thrust, and instrument errors leading to inappropriate changes in thrust, attitude or airspeed. When reviewed with respect to past aircraft accidents involving degraded performance neither existing ground proximity warning Mode 1 which is the excessive descent rate warning mode described in U.S. patent 4,060,793 nor mode 3 which is the negative climb after takeoff warning mode described in U.S. patent 4,319,218 would always provide as much warning as might be desired. For example, in certain wind shear situations the warning generated by existing Modes 1 and 3 may not be timely enough to be useful. U.S. patent 4,567,483 provides a variety of warning modes but none of these is operative below 30 feet (9 metres) of radio altitude.

In addition to giving timely alerts it is also highly desirable to give the aircrew an indication as to what should be done to recover from a dangerous situation especially under unusual circumstances such as wind shear or misleading instrument readings. For instance, there have been situations where an aircraft has struck the ground which could have been avoided if the aircrew had appreciated that the aircraft had additional performance immediately available in terms of airspeed that could have been converted to altitude or that additional thrust could have been applied.

With respect to degraded performance due to wind shear, there have been a number of proposed systems, as described, for example, in U.S. patents 4,043,194; 4,079,905; 4,229,725; 4,281,383; 4,342,912 and 4,336,606, for alerting an aircrew to a wind shear condition. However, such systems are often difficult to implement or require additional sensors or do not provide usable information in a timely manner.

In one approach described in U.S. patent 4,189,777, airspeed rate is used to detect a wind shear condition and in response thereto a ground proximity warning system Mode 1 warning curve is modified to increase warning time. Another approach relating to wind shear conditions is described in U.S. patent 4,347,572 in which angle of attack, stick shaker value, vertical speed, airspeed, flap position, and thrust are used to provide climb out guidance on a pilot flight director display in a wind shear situation.

None of the systems described above provide enhanced ground proximity warning or guidance for a comprehensive set of degraded aircraft performance situations.

Summary of the Invention

It is therefore an object of the invention to provide an aircraft ground proximity warning system with enhanced warning capability when aircraft performance is degraded.

It is a further object of the invention to provide an aircraft ground proximity warning system with enhanced warning capability near the ground. Specifically the warning envelope of Modes 1 and 3 are extended to within five feet (1.5m) of the ground. Radio altitude rate and barometric altitude rate signals are combined to provide a computed altitude rate signal that is accurate near the ground for use as an input to Modes 1 and 3.

It is an additional object of the invention to provide an aircraft ground proximity warning system with flight path deviation warning utilizing a measure of flight path and aircraft altitude. The measure of flight path can be based on aircraft vertical velocity. A flight path warning is provided whenever the aircraft flight path angle is less than a predetermined angle and when the aircraft is below a predetermined altitude.

It is still a further object of the invention to provide a pitch warning system for generating a warning when aircraft pitch is below a predetermined value after rotation. The pitch warning system can utilize angle of attack for pitch measurement.

It is another object of the invention to provide an aircraft ground proximity warning system with an output indicating that additional aircraft performance is available. Angle of attack is compared to stall angle of attack to generate an indication that angle of attack should be increased. A pilot indication to apply additional thrust can also be provided.

Brief Description of the Drawings

Fig. 1 is a functional block diagram of a ground proximity warning system with angle of attack and stall warning margin inputs;

Fig. 2 is a graphical representation of a Mode 1 warning envelope;

Fig. 3 is a graphical representation of a Mode 3 warning envelope;

Fig. 4 is a graphical representation of a flight path warning envelope;

Fig. 5 is a graphical representation of a takeoff angle of attack warning envelope;

Fig. 6 is a functional block diagram of the flight path warning logic portion of the warning system of Fig. 1, used during takeoff;

Fig. 7 is a functional illustration of the operation of the stall margin portion of the logic of Fig. 6; and

Fig. 8 is a functional block diagram of the flight path warning logic portion of the warning system of Fig. 1, used during approach.

Detailed Description of the Invention

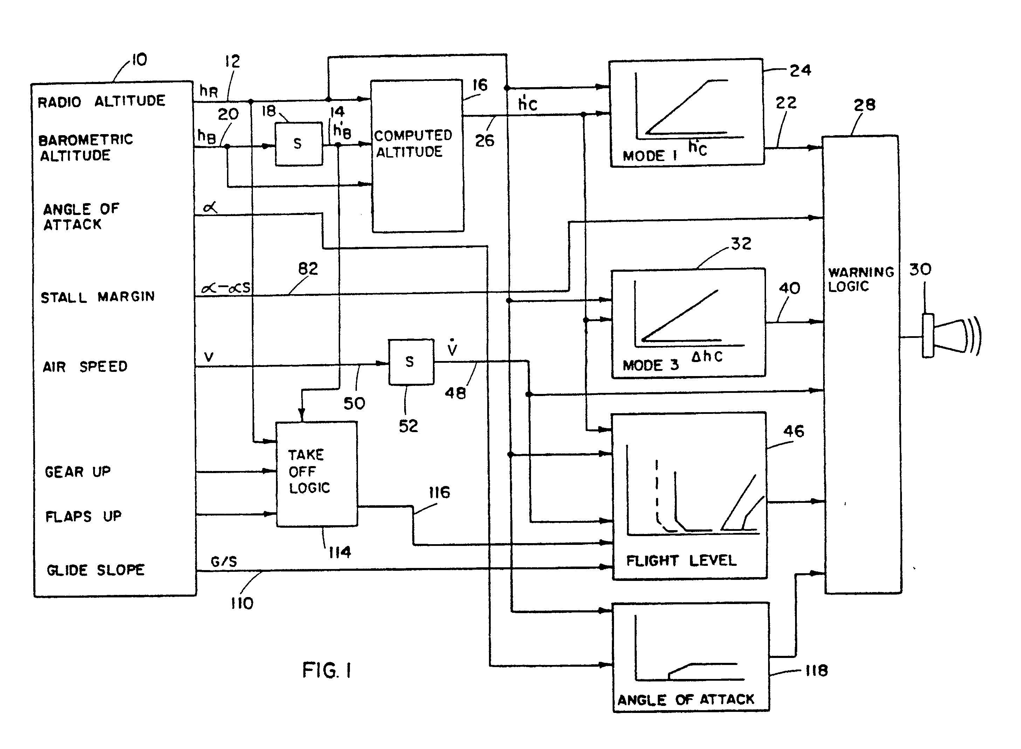

Fig. 1 illustrates in generalized block diagram form the preferred embodiment of the invention. A source of signals or data source for the warning system is indicated by a block 10. The signals provided by the data source 10 include: radio altitude $h_R$, barometric altitude $h_B$, angle of attack $\alpha$, stall margin $\alpha - \alpha s$, airspeed V, gear and flap position and glide slope G/S. Typically in modern digital commercial aircraft these signals are available from the aircraft digital data bus or flight management system. On older aircraft, these signals are normally available from individual instruments.

As shown in Fig. 1 the warning system has four separate warning modes. These modes include a Mode 1 excessive descent rate warning mode, a Mode 3 negative climb after takeoff warning mode, a flight path warning mode and a takeoff angle of attack warning mode. Although only four warning modes are described, it will be understood that the system could include other warning modes such as those disclosed in U.S. Patent 3,946,358.

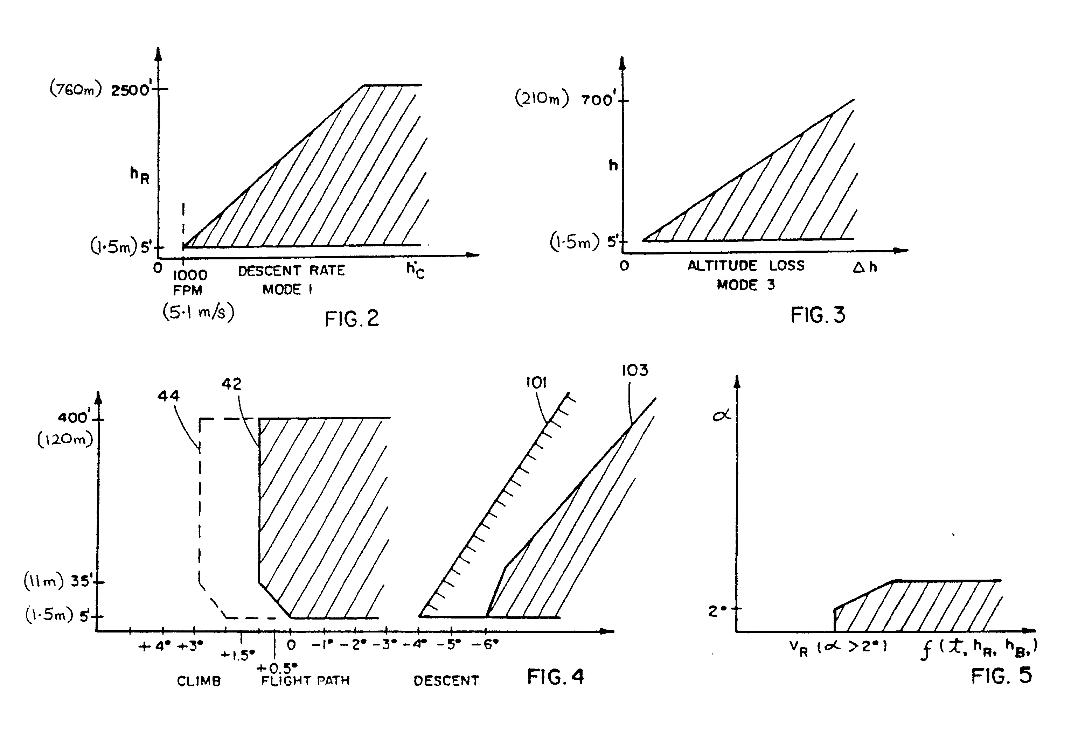

A graphical representation of an improved Mode 1 warning envelope is provided in Fig. 2. This warning envelope is similar to that shown in U.S. Patent 4,060,793 with the primary exception that the radio altitude cut off has been moved down to five feet (1.5m) of radio altitude as opposed to 50 feet (15m) in the prior art system. By lowering the warning boundary to five feet, warnings can be generated much closer to the ground which can be useful in, for example, wind shear situations on an approach to landing. Lowering the floor of Mode 1 is made possible by producing a computed altitude rate signal $h_C$ which overcomes error sources in the barometric rate signal close to the ground.

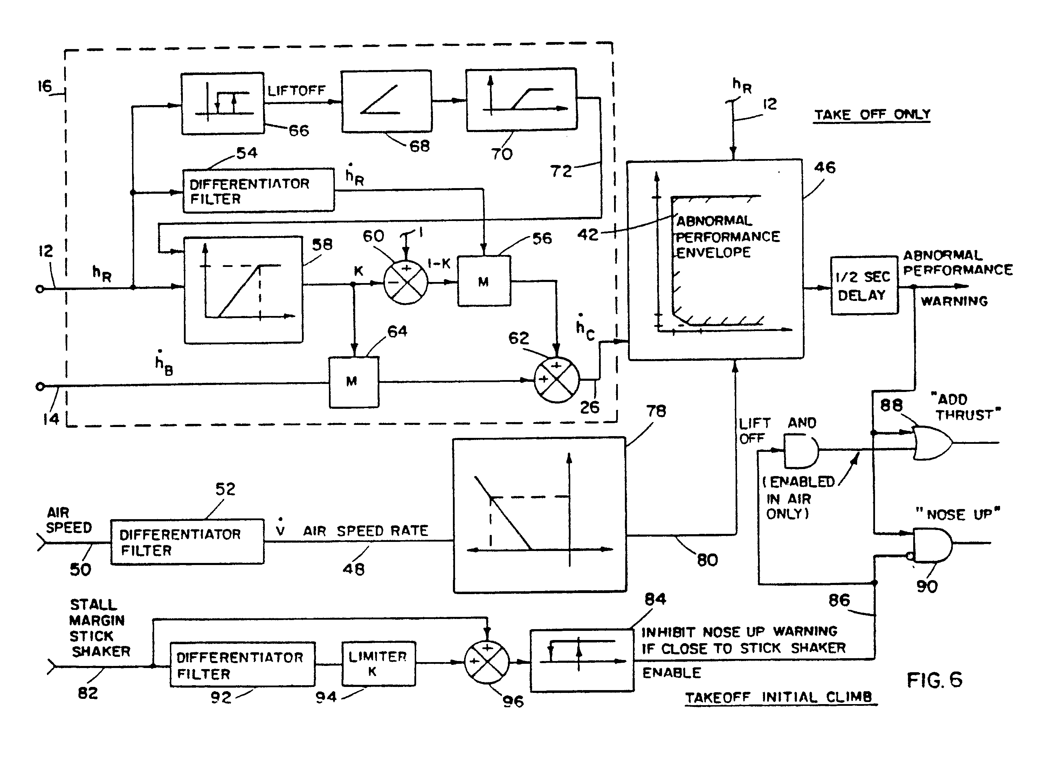

As shown in Fig. 1 the Mode 1 warning envelope of Fig. 2 is produced by applying the radio altitude signal $h_R$ on line 12 and a barometric rate signal $h_B$ on line 14 to a computed altitude circuit 16. The barometric rate signal is obtained from a differentiating circuit 18 which receives a barometric altitude signal $h_B$ from signal source 10 over line 20. The computed altitude circuit 16 which will be described in detail in connection with Fig. 6 combines the radio altitude rate signal $h_R$ with the barometric altitude rate signal to produce the computed altitude rate signal $h_C$. This signal includes proportionally more radio altitude rate the closer the aircraft is to the ground thereby tending to eliminate error sources in the barometric rate signals due to ground effects. Mode 1 warning initiated signals are produced on a line 22 by a warning circuit 24 which receives the computed altitude rate signal over line 26 and the radio altitude signal on line 12. Suitable means for implementing the operation of circuit 24 is disclosed in U.S. Patent 4,060,793. A warning logic circuit 28 receives the Mode 1 initiated signal on line 22 and generates, where appropriate, a voice warning on a cockpit speaker 30.

In a similar manner the effectiveness of Mode 3 is enhanced by reducing the radio altitude cut off from 50 feet (15m) to 5 feet (1.5m) as illustrated by the warning envelope cf Fig. 3. A warning mode logic circuit 32 receives the radio altitude signal over line 12 and the computed altitude rate signal $h_C$ over line 26 from the computed altitude rate circuit 16. It is the accuracy of the computed altitude rate signal that permits the Mode 3 warning of Fig. 3 to be reduced to five feet (1.5m) of radio altitude and hence resulting in a more responsive warning system. The logic circuit 32 operates in a conventional manner such as the systems disclosed in U.S. Patents 3,947,810 or 4,319,218 to produce warning initiate signals on line 40 when the aircraft descends a predetermined amount of altitude after takeoff.

Accident analysis has shown that flight safety can also be improved by giving a warning for inadequate flight path angle $\gamma$ when the aircraft is close to the ground either during takeoff or a landing approach. An illustration of the preferred embodiment of a flight path warning envelope for the takeoff phase of flight is provided in Fig. 4. Here the cross-hatched portion to the right of line 42 indicates that a flight path warning will be initiated for flight path angles less than 0.5° for radio altitudes of 35 feet (11m) or greater.

Wind shear can cause a sustained loss of airspeed. With a loss of airspeed a loss of altitude may follow and as such it is desired that the aircraft be in a climb attitude in order to prevent or minimize any dangerous loss of altitude near the ground. Therefore, under conditions of a negative airspeed rate, the warning curve of Fig. 4 is shifted to the left as indicated by the dashed line 44 so that a warning is given earlier at a greater flight path angle.

The flight path warning logic is represented by a logic block 46 of Fig 1 the details of which are shown in Fig. 6. Inputs to the logic block 46 include radio altitude on line 12, computed altitude rate 26 and airspeed rate on line 48. Airspeed V is obtained from data source 10 and applied over line 50 to a differentiator circuit 52.

Referring to Fig. 6 the computed altitude circuit 16 produces the computed altitude rate signal $h_C$ on line 26 by blending the barometric rate signal $h_B$ with a radio rate signal $h_R$ below a predetermined radio altitude $h_{RMAX}$. The radio altitude signal is differentiated by a differentiator circuit 54 and applied to a first multiplier circuit 56. A multiplier K having values from 0 to 1.0 as a function of radio altitude is produced by a function generator circuit 58. The value 1-K produced by a summing junction 60 is also applied to the first multiplier 56 resulting in the value $(1-K) h_R$ on a plus terminal of a summing junction 62. A second input to the summing junction 62 is the quantity $K h_B$ produced by a second multiplier circuit 64. The second multiplier circuit 64 receives the barometric rate signal over line 14 and the multiplier K from funtion generator circuit 58. In operation the circuit 16 will produce a computed altitude rate signal that at $h_{RMIN}$ and below is equal to radio altitude rate and at $h_{RMAX}$ is equal to barometric altitude rate.

In addition the computed altitude circuit 16 includes a detector circuit 66 responsive to radio altitude on line 12 to start a timer circuit 68 at lift off. The timer 68 inputs to a limiter circuit 70 that outputs a signal over a line 72 to the function generator circuit 58 that has the effect of making the value of K equal to 1.0 a predetermined time after the aircraft lifts off the runway.

As discussed above the warning curve of Fig. 4 is shifted to the left as a function of a decreasing rate of airspeed. A function circuit 78 in Fig. 6 responds to the airspeed rate signal on line 48 and serves by means of line 80 to bias the ouput of logic circuit 46 to provide a warning at greater flight path angles as a function of increasing negative airspeed rate.

With respect to the flight path warning, once a warning has been generated by the circuit 46 indicating that the aircraft may have an unsafe flight path, it is considered desirable to provide the aircrew with guidance as to what action will tend to maximize the safety of the aircraft. Logic which can form a portion of the warning logic 28 of Fig. 1 is shown in Fig. 6. A stall margin signal $\alpha\text{-}\alpha s$ from the signal source 10 is applied over a line 82 to a comparator circuit 84. If the stall margin signal indicates that the aircraft's angle of attack $\alpha$ is within a predetermined amount of the stick shaker angle of attack $\alpha s$, the comparator 84 will apply a logic signal over a line 86 to an OR gate 88. A positive logic output from gate 88 will cause an aural warning such as "add thrust" to be generated by the warning logic 28. The flight path logic 46 will put out a signal suggesting that the pitch attitude or flight path angle of the aircraft is too low. Normally the preferred aural warning will be "nose up" or "pitch up" to indicate that the aircraft pitch attitude should be increased due the proximity to the ground. However, if the stall margin logic signal on line 86 indicates that the aircraft attitude is already close to stall, a "pitch up" type advisory may be inappropriate. Therefore, an AND gate 90 serves to inhibit the "pitch up" warning when the aircraft is approaching stall. In the preferred embodiment of the invention, the "add thrust" advisory will always be generated since added thrust should always be considered by the aircrew when in difficulty close to the ground.

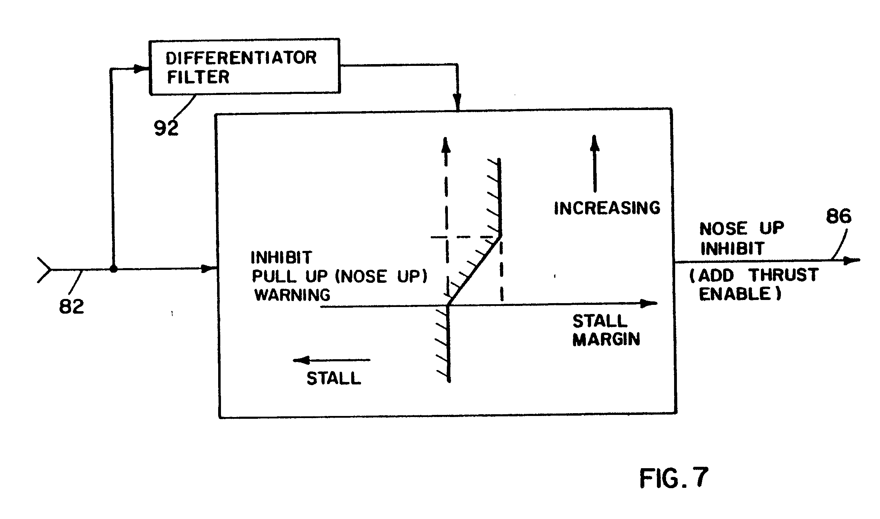

Note that the circuit of Fig. 6 includes a circuit 92, a limiter 94 and a summing junction 96 to provide a stall margin rate lead term to the comparator 84. This will speed the response of the circuit 84 if the rate of increase of angle of attack should indicate a rapid pitch up of the aircraft. Operation of this circuit is illustrated by Fig. 7.

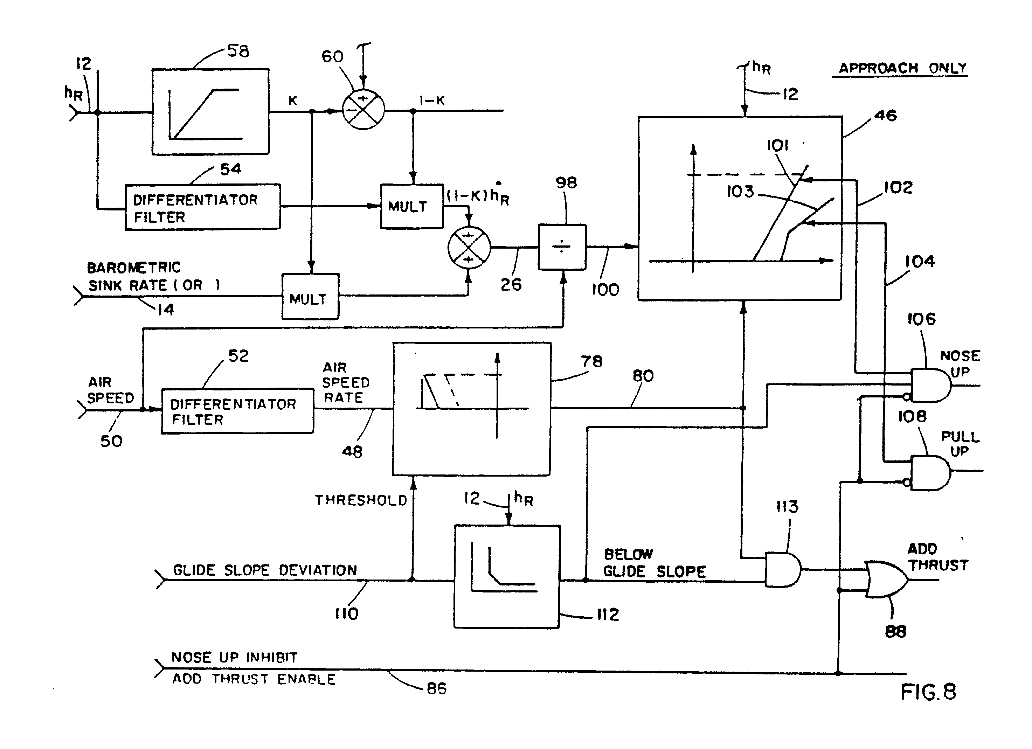

Flight path logic 46 for use when the aircraft is on approach is illustrated in Fig. 8. When on approach the function generator 46 of Fig. 1 will operate somewhat differently from the function generator of Fig. 6 illustrated by the warning envelope of Fig. 4. Therefore, the function generator of Fig. 8 will be indicated by 46'. Flight path angle $\gamma$ which is defined as the angle that the direction of travel of the aircraft makes with the horizon, can be approximated by vertical speed such as $h_B$ or $h_C$.

Computed altitude rate was used in the circuit of Fig. 6. A more accurate approximation of flight path is vertical speed divided by airspeed V. This approach is illustrated in Fig. 8 where a divider circuit 98 divides the computed 20 altitude rate on line 26 by the airspeed on line 50. This provides a flight path angle input over line 100 to the warning envelope function generator 46'.

Since the logic of Fig. 8 is used when the aircraft is on approaoh the normal flight path angle will be negative. The warning envelope shown in 46' of Fig. 8 will provide a first warning initiate signal on line 102 and a second on line 104 when flight path exceeds a second amount. The first signal on line 102 applied to an AND gate 106 will cause a "nose up" or "pitch up" aural warning. As described in connection with Fig. 6 the approaching stall margin signal on line 86 can inhibit the "pitch up" aural warning via AND gate 106. A pull up warning on an AND gate 108 can also be inhibited by a logic signal on line 86.

A glide slope signal G/S input from the signal source 10 of Fig. 1 on a line 110 can provide additional warning logic. This signal, input through a function generator circuit 112, can be used to inhibit the output of gate 106 when the aircraft is not below the glide slope criteria of function generator 112. The glide slope signal on line 118 can also be used to modify the bias applied by the function generator 78 to the warning envelope 46' over line 80.

An additional "add thrust" warning can be generated by OR gate 88 by coming through an AND gate 113 the airspeed rate signal on line 80 and the below glideslope signal from function generator 112.

The use of the logic of Fig. 6 or Fig. 8 for flight path warning depends on the phase of flight. If the aircraft is in a takeoff or go around phase of operation, the circuits of Fig. 6 is used. If the aircraft is in an approach phase, the circuit of Fig. 8 is used. In the preferred embodiment a takeoff logic circuit 114 is used to select the appropriate flight path warning circuit. Logic for such a circuit is disclosed in U.S. Patents 3,947,810 and 4,319,218. A phase of flight signal is transmitted from the takeoff logic 114 over a line 116 to circuit 46.

Under certain circumstances it may be desirable to give a warning of potentially insufficient angle of attack. The criteria for such a warning is illustrated in Fig 5. During takeoff, once the aircraft has rotated to a predetermined angle of attack, for example $2°$, any decrease in angle of attack will result in a warning. Logic for generating such a warning is indicated by a block 118 in Fig 1. Duration of this warning mode can be a function of time from lift off or radio altitude or barometric altitude.

## Claims

1. An aircraft ground proximity warning system including:

a source of radio altitude signals (12):

a source of barometric altitude signals (20);

means (54) responsive to the radio altitude signal (12) for generating a radio altitude rate signal;

means (18) responsive to the barometric altitude signal (20) for generating a barometric altitude rate signal (14); and

computed altitude rate means (16) for combining the radio altitude rate signal with the barometric altitude rate signal (14) to obtain a computed altitude rate signal (26);

characterized in that the computed altitude rate signal (26) includes a greater proportion of the radio altitude rate signal as radio altitude decreases.

2. The system of claim 1, additionally including Mode 3 logic means (32) responsive to the radio altitude signal (12) and to the computed altitude rate signal (26) for producing a computed altitude loss signal and for generating a warning signal (40) when the computed altitude loss signal is excessive for the radio altitude.

3. The system of claim 2, wherein the Mode 3 logic means (32) is operative down to 5 feet (1.5 metres) of radio altitude.

4. The system of any preceding claim, additionally including Mode 1 logic means (24) responsive to the radio altitude signal (12) and to the computed altitude rate signal (26) for generating a warning signal (22) when the computed altitude rate signal (26) represents a descent rate excessive for the radio altitude.

5. The system of claim 4, wherein the Mode 1 logic means (24) is operative down to 5 feet (1.5 metres) of radio altitude.

6. An aircraft ground proximity warning system including;

a source of radio altitude signals (12);

and characterized in having means (46) responsive only to measurements made on board the aircraft for generating a flight path angle signal; and

warning means (46) responsive to the flight path angle signal for generating a warning signal when the flight path angle signal is less than a threshold value.

7. The system of claim 6, wherein the warning means is additionally responsive to the radio altitude signals and wherein the threshold value varies as a function of radio altitude.

8. The system of claim 7, wherein the warning means is inhibited above a predetermined radio altitude.

9. The system of any of claims 6 to 8, additionally including a source of barometric altitude rate signals (14) and wherein the means for generating the flight path angle signal is responsive to the barometric rate signal such that the flight path signal is functionally related to the barometric rate signal.

10. The system of claim 9, additionally including a source (54) of radio altitude rate signals;
    computed altitude rate means (16) for combining the barometric altitude rate (14) and the radio altitude rate signal to obtain a computed altitude rate signal (26) wherein the computed altitude rate signal includes a greater portion of the radio altitude rate signal as radio altitude decreases; and
    wherein the flight path signal is functionally related to the computed altitude rate signal (26).

11. The system of any of claims 6 to 10, additionally including phase means (114) for determining phase of flight and wherein the threshold value is dependent on the phase of flight.

12. The system of any of claims 6 to 11, additionally including a stall margin signal source and warning logic (88,90) responsive to the warning signal and the stall margin signal (82) for generating a first warning indicating that the aircraft should pitch up except when the stall margin signal (82) is below a stall threshold value.

**Revendications**

1. Système avertisseur de la proximité du sol pour un aéronef, comprenant :
    une source de signaux d'altitude à la sonde (12) ;
    une source de signaux d'altitude barométrique (20) ;
    des moyens (54) qui, en réponse au signal (12) d'altitude à la sonde, génèrent un signal de taux d'altitude à la sonde ;
    des moyens (18) qui, en réponse au signal (20) d'altitude barométrique, génèrent un signal (14) de taux d'altitude barométrique ; et
    des moyens (16) de taux d'altitude calculé destinés à combiner le signal de taux d'altitude à la sonde avec le signal (14) de taux d'altitude barométrique pour obtenir un signal (26) de taux d'altitude calculé ;
    caractérisé en ce que le signal (26) de taux d'altitude calculé comprend une proportion de plus en plus grande du signal de taux d'altitude à la sonde au fur et à mesure que l'altitude à la sonde décroît.

2. Système selon la revendication 1, comprenant en outre un moyen logique (32) de Mode 3 qui, en réponse au signal (12) d'altitude à la sonde et au signal (26) de taux d'altitude calculé, produit un signal de perte d'altitude calculée et génère un signal d'avertissement (40) lorsque le signal de perte d'altitude calculée est excessif pour l'altitude à la sonde.

3. Système selon la revendication 2, dans lequel le moyen logique (32) de Mode 3 est opérationnel en descendant jusqu'à 5 pieds (1,5 mètre) d'altitude à la sonde.

4. Système selon l'une quelconque des revendications précédentes, comprenant en outre un moyen logique (24) de Mode 1 qui, en réponse au signal (12) d'altitude à la sonde et au signal (26) de taux d'altitude calculé, génère un signal d'avertissement (22) lorsque le signal (26) de taux d'altitude calculé représente un taux de descente excessif pour l'altitude à la sonde.

5. Système selon la revendication 4, dans lequel le moyen logique (24) de Mode 1 est fonctionnel en descendant jusqu'à 5 pieds (1,5 mètre) d'altitude à la sonde.

6. Système d'avertissement de la proximité du sol pour un aéronef, comprenant :
    une source de signaux (12) d'altitude à la sonde ;
    et caractérisé en ce qu'il comporte des moyens (46) qui, en réponse uniquement à des mesures réalisées à bord de l'aéronef, génèrent un signal d'angle de trajectoire de vol ; et
    des moyens d'avertissement (46) qui, en réponse au signal d'angle de trajectoire de vol, génèrent un signal d'avertissement lorsque le signal d'angle de trajectoire de vol est inférieur à une valeur de seuil.

7. Système selon la revendication 6, dans lequel les moyens d'avertissement réagissent en outre aux signaux d'altitude à la sonde et dans lequel la valeur de seuil varie en fonction de l'altitude à la sonde.

8. Système selon la revendication 7, dans lequel les moyens d'avertissement sont inhibés au-dessus d'une altitude à la sonde prédéterminée.

9. Système selon l'une quelconque des revendications 6 à 8, comprenant en outre une source de signaux (14) de taux d'altitude barométrique et dans lequel les moyens destinés à générer le signal d'angle de trajectoire de vol réagissent au signal de taux barométrique de manière que le signal de trajectoire de vol soit lié fonctionnellement au signal de taux barométrique.

10. Système selon la revendication 9, comprenant en outre une source (54) de signaux de taux d'altitude à la sonde ;

des moyens (16) de taux d'altitude calculé destinés à combiner le taux (14) d'altitude barométrique au signal de taux d'altitude à la sonde pour obtenir un signal (26) de taux d'altitude calculé dans lequel le signal de taux d'altitude calculé comprend une plus grande partie du signal de taux d'altitude à la sonde au fur et à mesure que l'altitude à la sonde diminue ; et

dans lequel le signal de trajectoire de vol est lié fonctionnellement au signal (26) de taux d'altitude calculé.

11. Système selon l'une quelconque des revendications 6 à 10, comprenant en outre un moyen de phase (114) destiné à déterminer la phase de vol et dans lequel la valeur de seuil dépend de la phase de vol.

12. Système selon l'une quelconque des revendications 6 à 11, comprenant en outre une source de signal de marge de décrochage et une logique d'avertissement (88, 90) qui, en réponse au signal d'avertissement et au signal (82) de marge de décrochage, génèrent un premier avertissement indiquant que l'aéronef devrait relever son assiette longitudinale sauf lorsque le signal (82) de marge de décrochage est au-dessous d'une valeur de seuil de décrochage.

**Ansprüche**

1. Bodennäherungswarnsystem für Luftfahrzeuge mit

einer Funkhöhensignalquelle (12);

einer barometrischen Höhensignalquelle (20);

einer Vorrichtung (54), die auf das Funkhöhensignal (12) anspricht und daraus ein Funkhöhenänderungssignal erzeugt;

einer Vorrichtung (18), die auf das barometrische Höhensignal (20) anspricht und daraus ein barometrisches Höhenänderungssignal (14) erzeugt; und

einer Vorrichtung (16) zur Berechnung der Höhenänderung, die das Funkhöhenände-rungssignal mit dem barometrischen Höhenän-derungssignal (14) kombiniert und daraus ein Höhenänderungssignal (26) berechnet;

dadurch gekennzeichnet, daß der Anteil des Funkhöhenänderungssignals am berech-neten Höhenänderungssignal (26) mit abneh-mender Funkhöhe zunimmt.

2. System gemäß Anspruch 1 mit zusätzlicher "Mode 3" Logikvorrichtung (32), die auf das Funkhöhensignal (12) und auf das berechnete Höhenänderungssignal (26) anspricht und daraus ein berechnetes Höhenverlustsignal (26) sowie ein Warnsignal (40) erzeugt, wenn das berechnete Höhenverlustsignal gegenüber der Funkhöhe zu groß ist.

3. System gemäß Anspruch 2, bei dem die "Mode 3" Logikvorrichtung (32) bis herunter auf 5 Fuß (1,50 m) Funkhöhe betriebsfähig ist.

4. System gemäß einem der vorhergehenden Ansprüche mit zusätzlicher "Mode 1" Logikvorrichtung (24), die auf das Funkhöhensignal (12) und das berechnete Höhenänderungssignal (26) anspricht und daraus ein Warnsignal (22) erzeugt, wenn das berechnete Höhenände-rungssignal (26) einer Sinkgeschwindigkeit ent-spricht, die gegenüber der Funkhöhe zu gro0 ist.

5. System gemäß Anspruch 4, bei dem die "Mode 1" Logikvorrichtung (24) bis herunter auf 5 Fuß (1,50 m) Funkhöhe betriebsfähig ist.

6. Bodennäherungswarnsystem für Luftfahrzeuge mit einer Funkhöhensignalquelle (12);

und gekennzeichnet durch eine Vorrichtung (46), die nur auf an Bord des Luftfahrzeugs vorgenommene Messungen anspricht und daraus ein Flugbahnwinkelsignal erzeugt; sowie

eine Warnvorrichtung (46), die auf das Flugbahnwinkelsignal anspricht und daraus ein Warnsignal erzeugt, wenn das Flugbahnwinkelsignal einen Schwellenwert absinkt.

7. System gemäß Anspruch 6, bei dem die Warnvorrichtung zusätzlich auf die Funkhöhensignale anspricht, und der Schwellenwert sich in Abhängigkeit von der Funkhöhe verändert.

8. System gemäß Anspruch 7, bei dem die Warnvorrichtung oberhalb einer vorgegebenen Funkhöhe außer Kraft gesetzt ist.

9. System gemäß einem der Ansprüche 6 bis 8 mit einer zusätzlichen barometrischen Höhenänderungssignalquelle (14) und bei dem die Vorrichtung, die das Flugbahnwinkelsignal erzeugt, auf das barometrische Höhenänderungssignal anspricht, derart daß das Flugbahnsignal mit dem barometrischen Änderungssignal funktionsverbunden ist.

10. System gemäß Anspruch 9 mit zusätzlicher Funkhöhenänderungssignalquelle (54); einer Vorrichtung (16) zur Berechnung der Höhenänderung, die die barometrische Höhenänderung (14) mit dem Funkhöhenänderungssignal kombiniert und daraus ein Höhenänderungssignal (26) berechnet, wobei der Anteil des Funkhöhenänderungssignals am berechneten Höhenänderungssignal mit abnehmender Funkhöhe zunimmt und wobei das Flugbahnsignal mit dem berechneten Höhenänderungssignal (26) funktionsverbunden ist.

11. System gemäß einem der Ansprüche 6 bis 10 mit einer zusätzlichen Phasenvorrichtung (114) zur Flugphasenbestimmung, wobei sich der Schwellenwert nach der Flugphase richtet.

12. System gemäß einem der Ansprüche 6 bis 11 mit einer zusätzlichen Durchsackspannensignalquelle und Warnlogik (88,90), die auf das Warnsignal und das Durchsackspannensignal (82) anspricht, und daraus für das Luftfahrzeug eine erste Warnung zum Aufkippen generiert, außer wenn das Durchsackspannensignal (82) unter einem Durchsackschwellenwert liegt.

FIG. 1

EP 0 190 345 B1

EP 0 190 345 B1

(760m) 2500'

$h_R$

(1·5m) 5'

O  1000
FPM

(5·1 m/s)

DESCENT RATE
MODE 1

$h_C$

FIG. 2

(210m) 700'

h

(1·5m) 5'

O  ALTITUDE LOSS
MODE 3

Δh

FIG. 3

400'
(120m)

44   42

(11m) 35'
(1·5m) 5'

+4° +3°  +1.5°   0  -1° -2° -3° -4° -5° -6°
                +0.5°

CLIMB   FLIGHT PATH      DESCENT

101   103

FIG. 4

α

2°

$V_R$ (α >2°)   $f$ (t, $h_R$, $h_B$,)

FIG. 5

FIG. 6

TAKE OFF ONLY

TAKEOFF INITIAL CLIMB

FIG. 7

EP 0 190 345 B1

FIG.8